# EUROPEAN PATENT SPECIFICATION

(11) **EP 1 910 884 B1**
(45) Date of publication and mention of the grant of the patent: **18.07.2012**
(21) Application number: 06744112.1
(22) Date of filing: 05.06.2006
(51) Int. Cl.: G02B 5/10, G02B 26/08, G02B 7/182

(54) **A METHOD OF CONSTRUCTING A THIN FILM MIRROR**
VERFAHREN ZUM KONSTRUIEREN EINES DÜNNFILMSPIEGELS
PROCÉDÉ DE CONSTRUCTION D'UN MIROIR À FILM MINCE

(30) Priority: 08.07.2005 GB 0514036
(43) Date of publication of application: 16.04.2008
(73) Proprietor: Rockwell Collins UK Limited, Burgess Hill West Sussex RH15 9UE (GB)
(72) Inventor: CREEK, Roy Edward, Newick, East Sussex BN8 4NU (GB)
(74) Representative: Jones, Graham Henry
(86) International application number: PCT/GB2006/002058
(87) International publication number: WO 2007/007024

(56) References cited:
- EP-A- 0 291 596
- EP-A- 1 176 447
- EP-A- 1 376 193
- US-A- 4 119 366
- US-A- 4 734 557
- US-A- 6 113 242
- US-A1- 2001 008 469
- US-B1- 6 332 687

## Description

This invention relates to a method of constructing a thin film mirror.

Thin film mirrors are known. They are used to give large field of view displays in image display apparatus. The image display apparatus may give displays for simulation, leisure, visualisation or computer design. In the displays for simulation, the thin film mirrors are typically used as part of a collimated or near collimated off-axis display. The thin film mirrors are also used in other applications such for example as solar collectors and telescopes.

The thin film mirrors are constructed using thin film. The thin film is usually a polymer thin film, for example polyethylene terephthalate, or another suitable thin film. The thin film has one surface which has been aluminised to provide a reflective surface.

EP 1176447 discloses a method of constructing a thin film mirror in which a thin film mirror is formed by attaching a thin film to a suction chamber, the edges of the suction chamber lying on the shape of the mirror to be formed, applying a partial vacuum to the suction chamber and then locally adjusting a tensioning means which is in contact with the surface of the thin film mirror.

EP 1376193 discloses apparatus for constructing a thin film mirror in which attachment means are used to attach the thin film to the suction chamber such that the thin film may be stretched in one direction to introduce tension in the thin film prior to a partial vacuum being applied to the suction chamber.

US 6113242 discloses a thin film mirror which has an outer ring for attaching the thin film and an inner ring which is in contact with the thin film but allows the thin film to move over it. This enables different partial vacuums to be applied to the inner ring and the outer annulus such that the shape of the thin film mirror formed may be adjusted to improve the desired shape of the thin film mirror.

The geometric accuracy of a thin film mirror is a major factor in determining the quality of the mirror and hence the usefulness of the mirror. This is especially so in image display apparatus. Thin film mirrors which are not planar thin film mirrors are typically constructed using a suction chamber. The geometric accuracy of such non-planar thin film mirrors is dependent upon the accuracy of the edges of the suction chamber, the method of application of the thin film to the edges of the suction chamber, and the deformation of the thin film when differential pressures are applied to either side of the thin film.

Non-planar, curved thin film mirrors may be formed using suction chambers which have various shapes. For spherical mirrors, the edges of the suction chambers typically lie on the surface of a sphere. A suction chamber which a circular edge would be defined by a small circle which is a circle formed by the intersection of a sphere and a plane that does not pass through the centre of the sphere. Alternatively, a suction chamber could be used to construct a spherical mirror with the suction chamber having a complex edge comprising portions of small circles, or portions of great circles, or a combination of portions of small and great circles. The great circles are formed by the intersection of a sphere and a plane that passes through the centre of the sphere. This type of suction chamber with a complex edge is used in the formation of thin film mirrors used in collimated image display apparatus for simulation purposes.

The thin film used in the formation of the thin film mirrors is initially supplied as a large sheet. The thin film is applied with no initial tension to the suction chamber. Tension in the thin film is introduced when suction or differential pressure is applied, and the thin film is drawn back into the suction chamber. An ideal shape will be achieved when the tensions in the thin film are close to uniform over the entire surface of the thin film. It is known that the thin film mirrors constructed in this way have an area in which the performance is not satisfactory, due to non-uniformity in the tensions in the thin film in this area. This area is typically a border region of the thin film mirror, the border region being that portion of the thin film adjacent to the edge of the suction chamber. The geometry of the thin film mirror is not accurate enough in this border region to be used, and consequently this area in many cases has to be covered or masked so as not to be seen. This unusable border area is known as the mirror deadband.

The mirror deadband may comprise a substantial portion of a thin film mirror. This in turn requires the thin film mirror to be constructed substantially larger than would be the case if the entire thin film mirror were able to be used.

It Is an aim of the present invention to provide a method of producing a thin film mirror, which method reduces the mirror deadband area.

Accordingly, the present invention provides a method of constructing a thin film mirror, which method comprises:
(i) attaching a thin film to a suction chamber, the suction chamber having edges which are for attaching the thin film and which lie In a desired geometry for the thin film mirror to be constructed;
(ii) applying a partial vacuum to the suction chamber such that tension is introduced into the thin film;
(iii) adjusting the partial vacuum to form the thin film mirror but with the thin film mirror achieving the desired geometry only over a portion of the thin film mirror:
(iv) providing first tensioning means and locally adjusting the first tensioning means such that the portion of the thin film mirror which achieves the desired geometry is increased, the first tensioning means being In contact with the surface of the thin film adjacent to the edge of the suction chamber at a first distance which is substantially uniform from the edge of the suction chamber; and characterised by
(v) providing second tensioning means and locally adjusting the second tensioning means such that the portion of the thin film mirror which achieves the desired geometry is further increased, the second tensioning means being in contact with the surface of the thin film adjacent to the first tensioning means at a second distance which is substantially uniform from the edge of the suction chamber, and which second distance is greater than the first distance from the edge of the suction chamber of the first tensioning means.

A thin film mirror produced by the method of the present invention has a reduced mirror deadband as compared with a similarly sized mirror produced by known methods. By reducing the mirror deadband, the method of the present invention enables smaller mirrors to be constructed having the same usable area or field of view. Because the mirrors are smaller, they are able to be less expensive than known comparable mirrors. Thus thin film mirrors produced by the method of the present invention have an improved performance over thin film mirrors produced by traditional methods, and this improved performance leads to less expensive mirrors and less expensive production costs.

The method of the present invention is preferably such that the thin film is a polymer thin film. Preferably the polymer is polyethylene terephthalate. Other polymers may however be employed.

The thin film mirror may have a mirrored surface. The mirrored surface is preferably an aluminised mirror surface. Other types of mirror surface may be employed.

The method of the invention may be one in which a vacuum pump is used to apply the partial vacuum.

The suction chamber may have a circular edge profile. The suction chamber may have edges which lie in the geometry of the thin film mirror to be constructed, which geometry is spherical. Alternatively, the suction chamber may have edges which lie in the geometry of the thin film mirror to be constructed, which geometry is toroidal. Alternatively, the suction chamber may have edges which lie in the geometry of the thin film mirror to be constructed, which geometry is ellipsoidal. Alternatively, the suction chamber may have edges which lie in the geometry of the thin film mirror to be constructed, which geometry is paraboloidal.

The first tensioning means may be a single continuous tensioning means in contact with the surface of the thin film mirror. Alternatively, the first tensioning means may comprise two or more separate pieces.

The first tensioning means may be a flexible tensioning means. Alternatively, the first tensioning means may be a semi-rigid tensioning means.

The first tensioning means may have a circular cross section. Alternatively, the first tensioning means may have a semi-circular cross section.

The first tensioning means may be adjustable locally.

The second tensioning means may be a single continuous tensioning means in contact with the surface of the thin film mirror. Alternatively, the second tensioning means may comprise two or more separate pieces.

The second tensioning means may be a flexible tensioning means. Alternatively, the second tensioning means may be a semi-rigid tensioning means.

The second tensioning means may have a circular cross section. Alternatively, the second tensioning means may have a semi-circular cross section.

The second tensioning means may be adjustable locally.

The thin film mirror produced by the method of the present invention may be used in image display apparatus. The image display apparatus may be collimated image display apparatus. The collimated image display apparatus may be an off-axis collimated image display apparatus. Alternatively, the thin film mirror may be used in a telescope. Alternatively, the thin film mirror may be used in a solar collector. As used in its various applications, the thin film mirror will usually be attached to the suction chamber in order for the thin film mirror to keep the desired geometry.

A method of constructing a thin film mirror in accordance with the present invention will now be given by way of example only and with reference to the following Example.

### EXAMPLE

A thin film is initially attached to the edges of a suction chamber. The edges of the suction chamber normally lie in the geometry of the thin film mirror which is to be manufactured. The thin film is attached to the suction chamber with little or no tension in the film. The pressure is reduced in the suction chamber, producing a partial vacuum in the suction chamber. The greater external air pressure forces the thin film to be stretched, introducing tension into the thin film.

A first tensioning means is provided and this first tensioning means which is in contact with the surface of the thin film mirror is locally adjusted. This local adjustment is effected by pushing the first tensioning means to a greater or lesser extent against the thin film, whilst monitoring the geometry of the thin film mirror. The usable area of the thin film mirror is increased. The unusable boundary area is decreased. If the first tensioning means is a semi-rigid or flexible rod, for example, then the degree to which the tensioning means introduces tension into the boundary portion of the thin film mirror may be varied locally such that any local variations or anomalies may be compensated for. This adjustment follows an iterative process of adjusting and ascertaining the performance of the thin film mirror, until a satisfactory result is achieved. The first tensioning means is positioned against the surface of the thin film mirror adjacent to the edge of the suction chamber. The first tensioning means is positioned within the deadband area of the mirror, and the first tensioning means has the effect of increasing the usable central portion of the thin film mirror, i.e. decreasing the deadband.

Second tensioning means is provided which is also in contact with the surface of the thin film mirror. The second tensioning means is positioned adjacent to the first tensioning means on the side of the first tensioning means away from the edge of the suction chamber. This second tensioning means is also locally adjusted, that is pushed to a greater or lesser extent against the thin film whilst monitoring the geometry of the thin film mirror. The second tensioning means is positioned adjacent to the first tensioning means but is also within that area identified as being unusable, i.e. the deadband boundary area. If a similar iterative process is followed to adjust the second tensioning means, the portion of the thin film mirror which is usable is further increased as tension is introduced into the deadband area by the second tensioning means. By using first and second tensioning means in conjunction with the thin film mirror under partial vacuum on the suction chamber, the portion of the thin film which achieves the desired geometry and which is consequently usable is greater than that which is achievable if the first and second tensioning means were not used.

The method is thus such that the size of the thin film mirror which is achievable from the suction chamber is increased as compared with known methods of producing a thin film mirror. The present method is of particular importance in thin film mirrors manufactured from thin film which is approaching its maximum dimensions. Some thin film mirrors, especially those used in simulation display apparatus, are limited in size by the physical size of the thin film raw material which is available. If a larger portion of the thin film can be manufactured to achieve the desired geometry, then the actual size of the thin film mirror which can be manufactured to a usable standard is increased.

In the present Example, the thin film is typically polyethylene terephthalate thin film. The thin film typically has a thickness of one thousandth of an inch (25 microns) with an aluminised surface applied to the surface of the thin film. Other types of polymer thin film may be used to manufacture the thin film mirror. Where other types of polymer thin film is employed, then these polymer thin films may have the same thickness or a different thickness to that specified above for the typically used polyethylene terephthalate film.

In the present Example, the first and second tensioning means are positioned such that they contact the surface of the thin film on the side of the thin film which is external to the suction chamber. The cross sectional shape of the tension means is therefore important as it is in contact with the thin film. The first tensioning means may have a circular cross section, and it may be in the form of a rod or tube. The first tensioning means may have flexible or semi-rigid properties. The first tensioning means may be a continuous element or it may comprise two or more separate elements. Where two or more separate elements are employed, then they may be joined together. Alternatively cross sectional shapes may be employed for the first tensioning means if desired.

The first tensioning means is positioned in contact with the thin film and is able to be adjusted locally. In other words, tension is able to be introduced into parts of the thin film to a greater or lesser extent than in other parts of the thin film.

The first tensioning means is located in contact with the thin film adjacent to the edge of the suction chamber at a distance away from the edge of the suction chamber which is a portion of the overall dimension of the thin film mirror. This distance may be identical for the full perimeter of the suction chamber, or this distance may vary at different points around the perimeter.

The second tensioning means may have a circular cross section and may have the form of a rod or tube. The second tensioning means may have flexible or semi-rigid properties. The second tensioning means may be a continuous element or it may comprise two or more separate elements. Where two or more separate elements are employed, then these separate elements may be joined together. Other cross sectional shapes may be employed for the second tensioning means.

The second tensioning means is located in contact with the thin film on the same side of the thin film as the first tensioning means. Also, the second tensioning means is adjacent to the first tensioning means and at a second distance away from the edge of the suction chamber which is greater than the first distance away from the edge of the suction chamber of the first tensioning means.

By comparison with traditional methods of manufacturing thin film mirrors, it is to be noted that the traditional method of manufacturing a thin film mirror would be to adjust the partial vacuum such that the shape of the thin film mirror was close to the desired geometry. However, the usable area of the thin film mirror made by the traditional manufacturing method is restricted and there is a deadband. This is because little or no tension is introduced into the boundary area of the thin film, the boundary area being the portion of the thin film adjacent the edge of the suction chamber. Consequently, when the thin film is placed under a partial vacuum, this boundary portion does not behave, and in particular does not stretch, in the same way as the remaining central portion of the thin film mirror. The boundary portion does not adopt a shape or geometry which provides satisfactory performance.

The method of the present invention will now be described solely by way of example and with reference to the accompanying drawings in which:
Figure 1 is a cross sectional view through a suction chamber with a thin film attached;
Figure 2 is a cross sectional view of a suction chamber with a partial vacuum applied to the suction chamber;
Figure 3 is a cross sectional view like Figure 2 but shows non-usable deadband areas of the produced thin film mirror;
Figure 4 is a cross sectional view showing the suction chamber with a partial vacuum applied to the suction chamber, and also showing first tensioning means;
Figure 5 is a cross section like Figure 4 but also showing second tensioning means;
Figure 6 is a front view of the suction chamber having a planar circular edge profile, and shows the locations of the first and second tensioning means as employed in Figure 5;
Figure 7 shows a suction chamber used to form a thin film mirror, the suction chamber having a non-planar edge profile, and the locations of the first and second tensioning means also being shown; and
Figure 8 is a flow chart showing various steps in the method of the present invention.

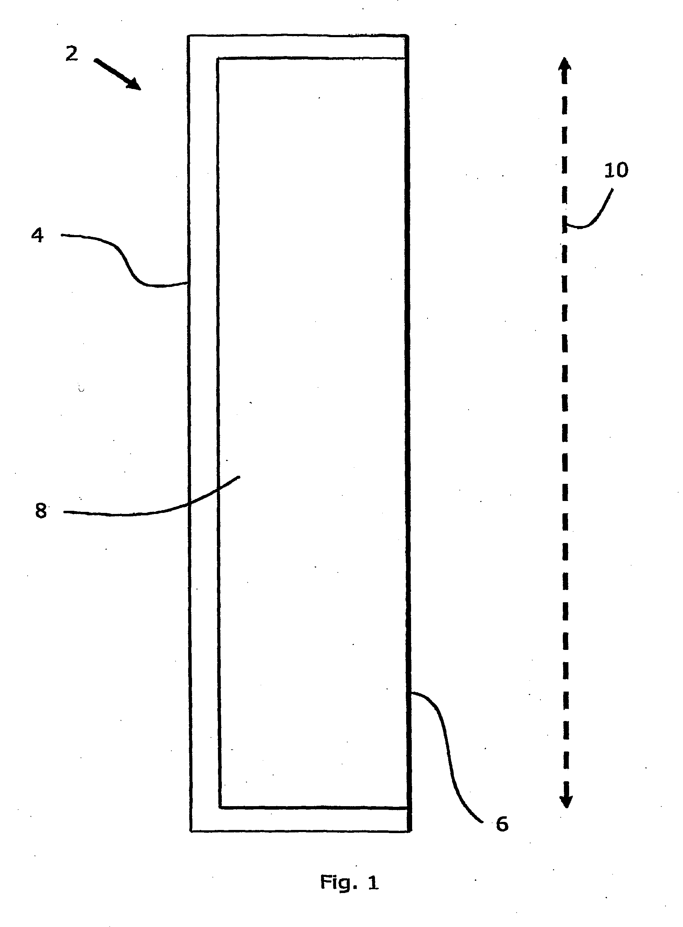

Referring to Figure 1, there is shown apparatus 2 comprising a suction chamber 4 having a thin film mirror 6 attached to the edges of the suction chamber 4. Air pressure to the interior 8 of the suction chamber 4 has not been reduced. In other words, a partial vacuum has not been applied. The thin film 6 is thus not under tension and it remains in a flat state between the edges of the suction chamber 8. The full available width 10 of the suction chamber 8 is indicated by the broken line.

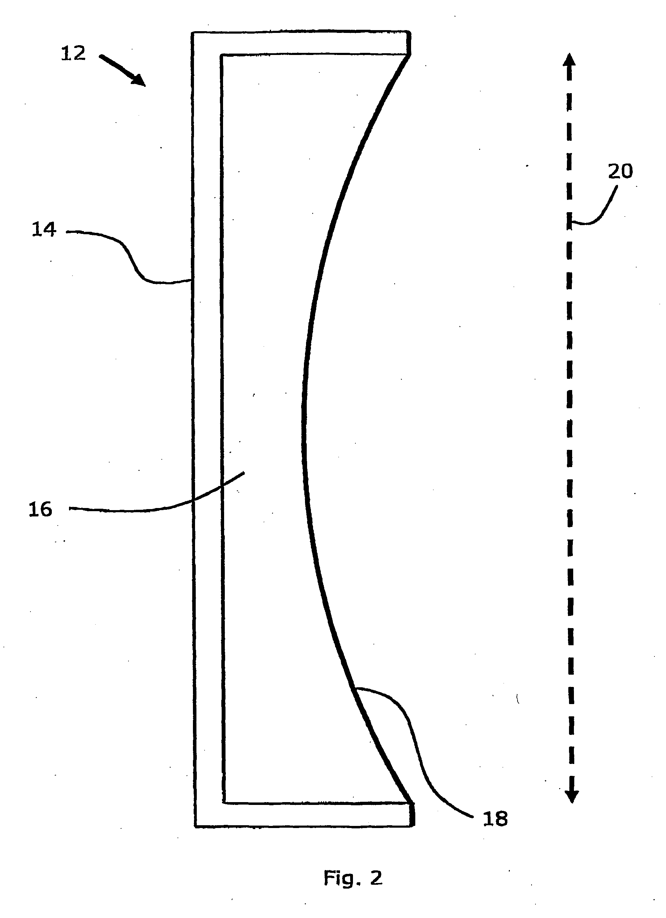

Figure 2 shows apparatus 12 comprising a suction chamber 14. The interior 16 of the suction chamber 14 has been subjected to a partial vacuum. Consequently, thin film 18 is shown as having been sucked into the suction chamber 14. If the thin film 18 is subjected to uniform tension, then the shape formed in cross section by the thin film 18 would be described by an arc of a circle. The radius of this circle would vary with the extent to which the thin film 18 is sucked into the suction chamber 14. In this ideal case, the usable area of the thin film 18 is indicated by the broken line 20 and it remains the full width of the suction chamber 16. However, the thin film 18 does not behave uniformly, and consequently the usable area of the thin film 18 to produce a thin film mirror is reduced to an area less than the maximum available. This means that thin film mirrors produced by the general method described above for Figures 1 and 2 are not usable up to a substantial distance from the edges of the suction chamber.

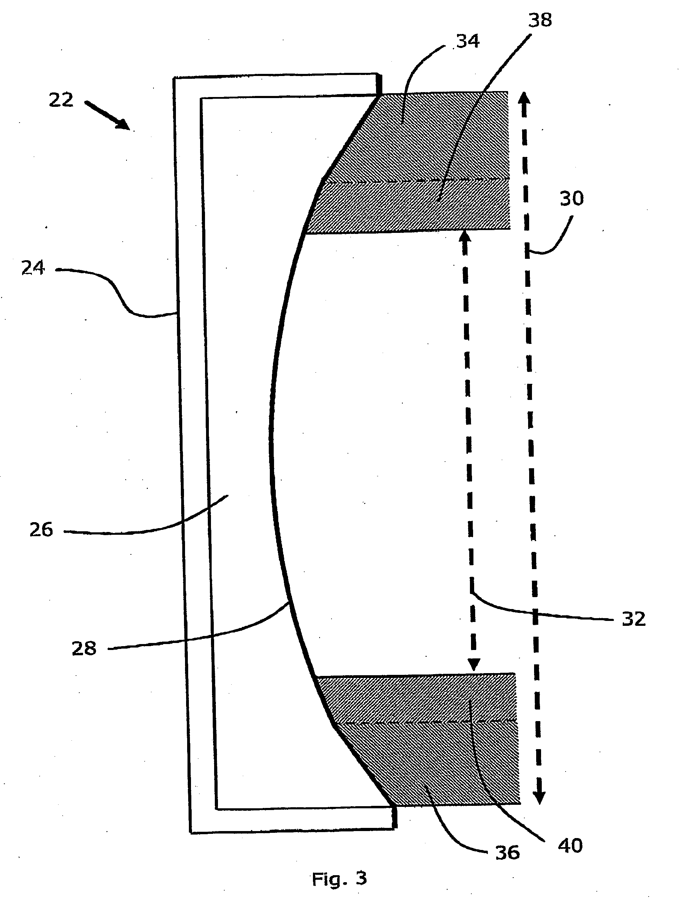

Figure 3 shows apparatus 22 having a suction chamber 24. The interior 26 of the suction chamber 24 has been subjected to a partial vacuum. This means that thin film 28 has been sucked back into the suction chamber 24. The broken line 30 indicates the maximum possible usable extent of the thin film 28. The broken line 32 indicates the actual usable extent of the thin film 28. As can be seen from a comparison of the broken lines 30, 32, the actual usable extent of the thin film 28 is significantly less than the maximum available. The boundary region of the thin film mirror produced from the thin film 28 is indicated by boundary regions 34, 36.

These boundary regions 34, 36 of the thin film mirror are those which have little or no tension, and consequently do not have the correct geometry for the desired thin film mirror. The area of the thin film mirror indicated as area 38 is a transitional area situated between the usable area of the thin film mirror and the area 34. This transitional area 38, although having significantly more tension that the area 34, still does not achieve the desired geometry for the thin film mirror. This means that the unusable deadband area of the thin film mirror at this edge of the suction chamber is the combination of areas 34 and 38. Similarly, on the other side of the suction chamber 24, the unusable deadband area is the combination of areas 36 and 40.

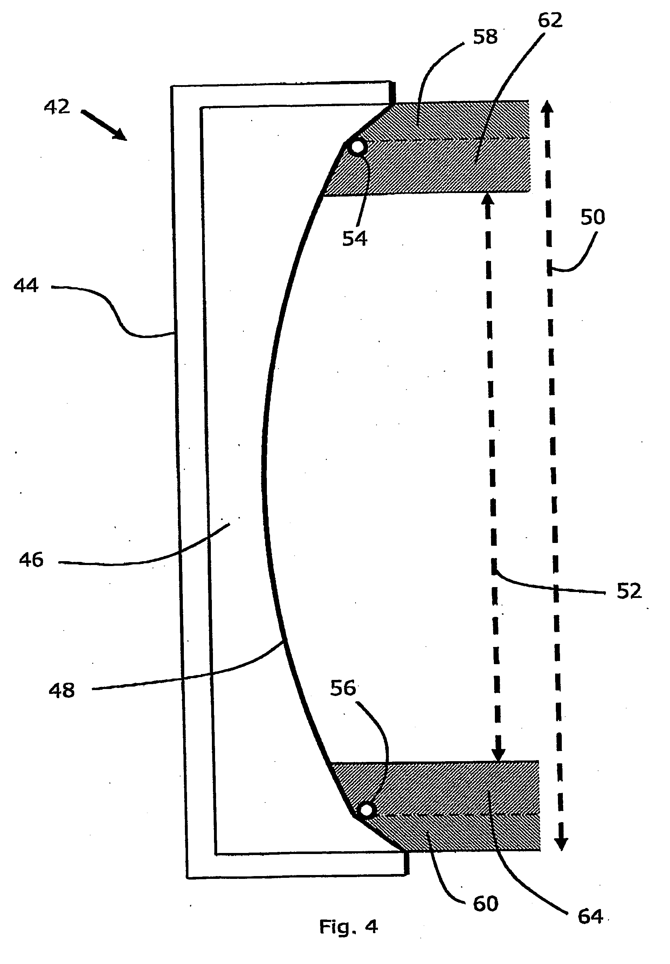

Figure 4 shows apparatus 42 comprising a suction chamber 44. The interior 46 of the suction chamber 42 has been subjected to a partial vacuum. This has caused thin film 48 to be sucked back into the suction chamber 44. The broken line 50 indicates the maximum possible usable extent of the thin film 48. The broken line 52 indicates the actual usable extent of the thin film 48. First tensioning means 54, 56 is shown in cross section at a location adjacent to the edge of the suction chamber 44. The first tensioning means 54, 56 introduced tension into the thin film 48 in the deadband area, and reduced the size of the deadband area as a portion of the overall area of the thin film 48. The dead band is indicated by areas 58, 60, 62 and 64.

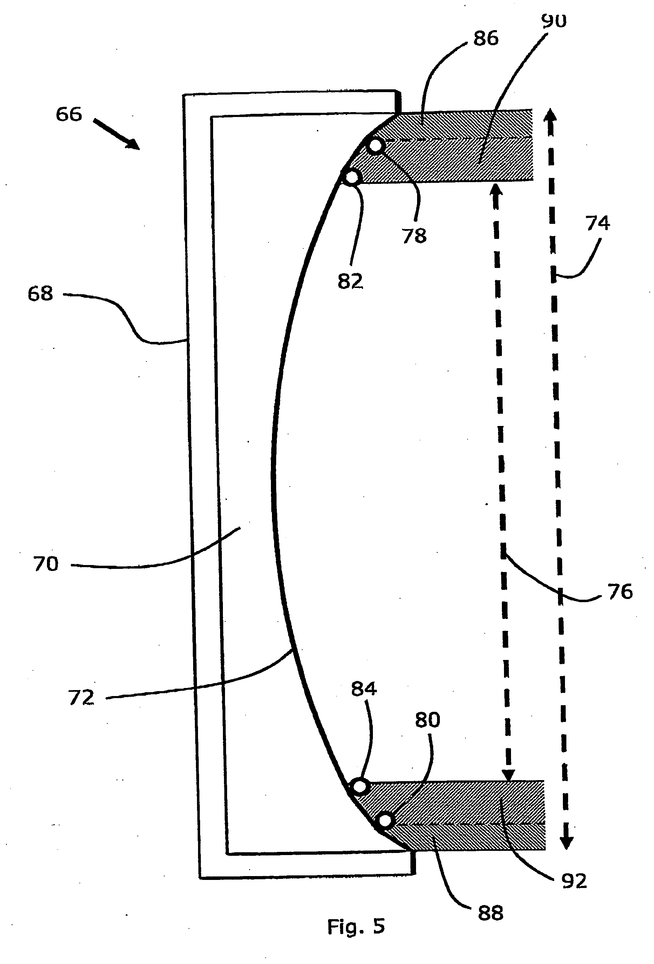

Figure 5 shows apparatus 66 for carrying out the method of the present invention. The apparatus 66 comprises a suction chamber 68. The interior 70 of the suction chamber 68 has been subjected to a partial vacuum. This has caused thin film 72 to be sucked back into the suction chamber 68. The broken line 74 indicates the maximum possible usable extent of the thin film 72. The broken line 76 indicates the actual usable extent of the thin film 72. First tensioning means 78, 80 as shown in cross section. The first tensioning means 78, 80 is shown positioned in contact with the surface of the thin film 72. The first tensioning means 78, 80 has been adjusted in accordance with the method of the present invention as described above. Second tensioning means 82, 84 is shown in cross section. The second tensioning means 82, 84 is located adjacent the first tensioning means 78, 80, and in contact with the thin film surface on the side of the first tensioning means 78, 80, and away from the edge of the suction chamber 70. The usable area of the thin film mirror 76 is now greater than the usable area 52 shown in Figure 4 where just the first tensioning means 54, 56 was employed. The use of the second tensioning means 82, 84 has further increased the proportion of the thin film mirror which has the desired geometry.

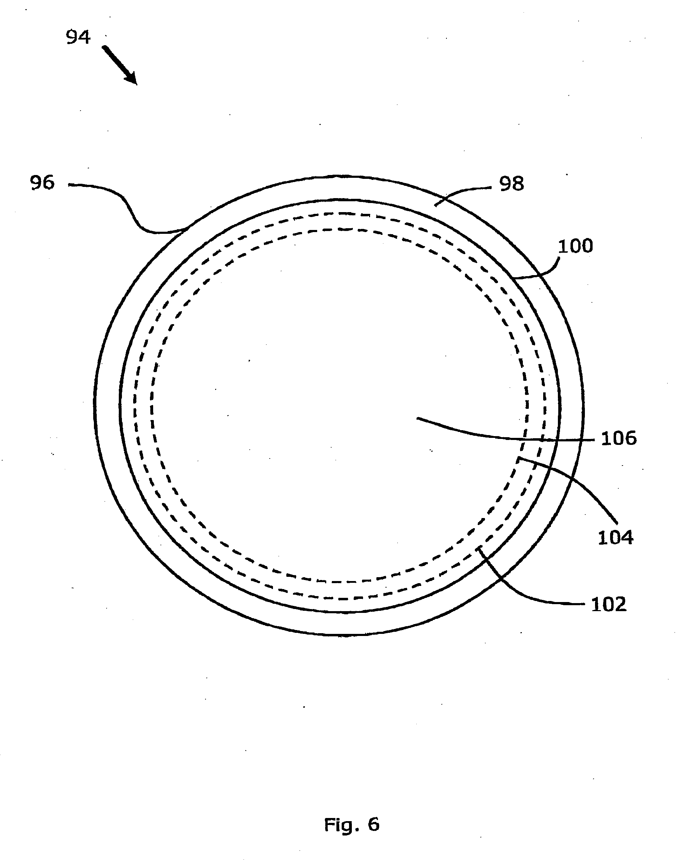

Figure 6 shows apparatus 94 comprising a suction chamber 96 with a thin film 106 attached. The thin film 106 is attached to the edge of the suction chamber 98. When a partial vacuum is applied to the suction chamber 98, the thin film distorts at the inside edge of the chamber 100. The first tensioning means is located at the position indicated by broken line 102. The second tensioning means is located at the position indicated by broken line 104.

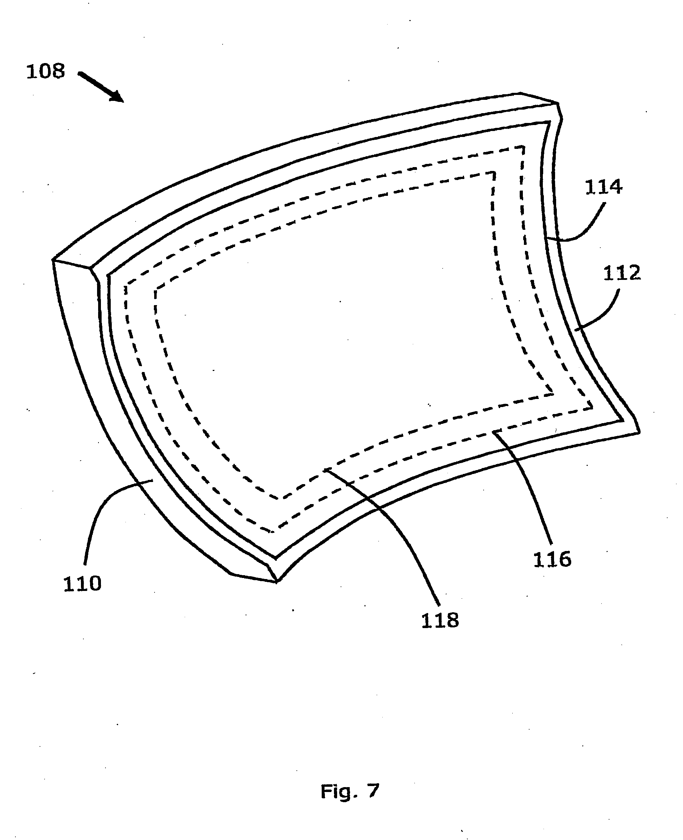

Figure 7 shows apparatus 108 comprising a suction chamber 110. The suction chamber 110 is not circular, as is the case for the suction chamber 96 shown in Figure 6. The suction chamber 110 shown in Figure 7 is such that the edges of the suction chamber 110 lie on the desired geometry of the thin film mirror to be manufactured. In this case, the thin film mirror will be spherical in shape, the edges of the suction chamber 110 being partial small and great circles of the sphere. The thin film mirror is attached to the edge 112 of the suction chamber 110. When a partial vacuum is applied to the suction chamber 110, the thin film will distort from the inside edge 114 of the suction chamber 110. The first tensioning means is located at the position indicated by the broken line 116. The second tensioning means is indicated by the broken line 118. The first and the second tensioning means may be made as single piece first and second tensioning means, or they may be made in one or more sections.

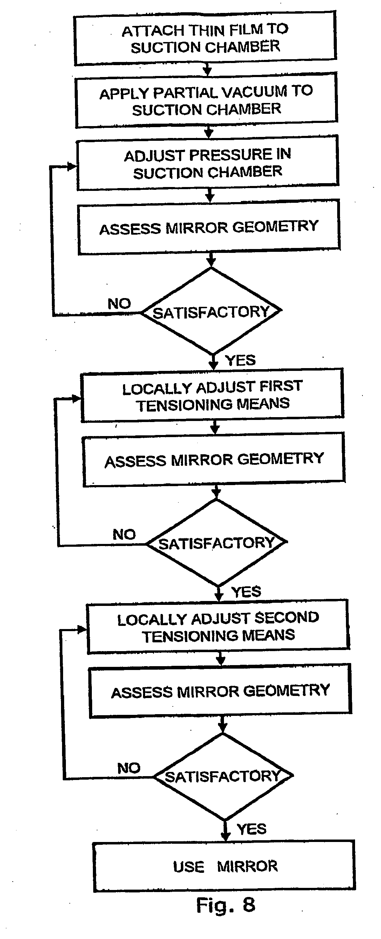

Figure 8 shows a flow chart identifying method steps employed to manufacture a thin film mirror on a suction chamber, the thin film mirror being produced to have proved performance and an increased proportion of the thin film which achieves the performance levels.

It is to be appreciated that the embodiments of the invention described above with reference to the accompanying drawings have been given by way of example only and that modifications may be effected. Thus, for example, the first and second tensioning means have been shown as being flexible or semi-rigid in cross section. Other cross sectional shapes may be employed. Also, there are many different ways of maintaining the first and second tensioning means in contact with the thin film, whilst being able locally to adjust the tension imparted to the thin film by the first and the second tensioning means. By way of example, it is mentioned that a local adjustment may be effected by a series of individually adjustable levers, the levers being fixed to the outside of the suction chamber, to locally adjust the first and the second tensioning means.

## Claims

1. A method of constructing a thin film mirror, which method comprises:
(i) attaching a thin film (72) to a suction chamber (68), the suction chamber (68) having edges which are for attaching the thin film (72) and which lie in a desired geometry for the thin film mirror to be constructed;
(ii) applying a partial vacuum to the suction chamber (68) such that tension is introduced into the thin film (72),
(iii) adjusting the partial vacuum to form the thin film mirror but with the thin film mirror achieving the desired geometry only over a portion (76) of the thin film mirror,
(iv) providing first tensioning means (78, 80) and locally adjusting the first tensioning means (78, 80) such that the portion (76) of the thin film mirror which achieves the desired geometry is increased, the first tensioning means (78, 80) being in contact with the surface of the thin film (72) adjacent to the edge of the suction chamber (68) at a first distance which is substantially uniform from the edge of the suction chamber (68), and **characterised by**
(v) providing second tensioning means (82, 84), and locally adjusting the second tensioning means (82, 84) such that the portion (76) of the thin film mirror which achieves the desired geometry is further increased, the second tensioning means (82, 84) being in contact with the surface of the thin film (72) adjacent to the first tensioning means (78, 80) at a second distance which is substantially uniform from the edge of the suction chamber (68), and which second distance is greater than the first distance from the edge of the suction chamber (68) of the first tensioning means (78, 80).

2. A method according to claim 1 in which the thin film (72) is a polymer thin film.

3. A method according to claim 2 in which the polymer Is polyethylene terephthalate.

4. A method according to any one of the preceding claims in which the thin film (72) has a mirrored surface.

5. A method according to claim 4 in which the mirrored surface is an aluminised mirror surface.

6. A method according to any one of the preceding claims in which a vacuum pump is used to apply the partial vacuum.

7. A method according to any one of the preceding claims in which the suction chamber (68) has a circular edge profile.

8. A method according to any one of the preceding claims in which the suction chamber (68) has edges which lie in the geometry of the thin film minor to be constructed, which geometry is spherical.

9. A method according to any one of claims 1 - 7 in which the suction chamber (68) has edges which lie in the geometry of the thin film mirror to be constructed, which geometry is toroidal.

10. A method according to any one of claims 1 - 7 in which the suction chamber (68) has edges which lie in the geometry of the thin film mirror to be constructed, which geometry is ellipsoidal.

11. A method according to any one of claims 1 - 7 in which the suction chamber (68) has edges which lie in the geometry of the thin film mirror to be constructed, which geometry is paraboloidal.

12. A method according to any one of the preceding claims in which the first tensioning means (78, 80) is a single continuous tensioning means in contact with the surface of the thin film mirror.

13. A method according to any one of claims 1 - 11 in which the first tensioning means (78, 80) comprises two or more separate pieces.

14. A method according to any one of the preceding claims in which the first tensioning means (78,80) is a flexible tensioning means.

15. A method according to any one of claims 1 - 13 in which the first tensioning means (78, 80) is a semi-rigid tensioning means.

16. A method according to any one of the preceding claims in which the first tensioning (78, 80) means has a circular cross section.

17. A method according to any one of claims 1 - 15 in which the first tensioning means (78, 80) has a semi-circular cross section.

18. A method according to any one of the preceding claims in which the first tensioning means (78, 80) is adjustable locally.

19. A method according to any one of the preceding claims in which the second tensioning means (82, 84) is a single continuous tensioning means in contact with the surface of the thin film mirror.

20. A method according to any one of claims 1 - 18 in which the second tensioning means (82, 84) comprises two or more separate places.

21. A method according to any one of the preceding claims in which the second tensioning means (82, 84) is a flexible tensioning means.

22. A method according to any one of claims 1 - 20 in which the second tensioning means (82, 84) is a semi-rigid tensioning means.

23. A method according to any one of the preceding claims in which the second tensioning means (82, 84) has a circular cross section.

24. A method according to any one of claims 1 - 22 in which the second tensioning means (82, 84) has a semi-circular cross section.

25. A method according to any one of the preoed"mg c1afms In which the second tensioning means (82, 84) is adjustable locally.

## Patentansprüche

1. Verfahren zum Konstruieren eines Dünnfilmspiegels mit folgenden Schritten:
(i) Anbringen eines Dünnfilms (72) an eine Saugkammer (68), die Ränder hat, die für das Anbringen des Dünnfilms (72) bestimmt sind und in einer für die Konstruktion des Dünnfilmspiegels gewünschten Geometrie liegen,
(ii) Anlegen eines Teilvakuums an die Saugkammer (68), so dass Spannung in den Dünnfilm (72) eingeleitet wird,
(iii) Einstellen des Teilvakuums zur Bildung des Dünnfilmspiegels, wobei der Dünnfilmspiegel die gewünschte Geometrie jedoch nur über einen Abschnitt (76) des Dünnfilmspiegels erzielt,
(iv) Bereitstellen eines ersten Spannmittels (78, 80) und örtliches Einstellen des ersten Spannmittels (78, 80), so dass der die gewünschte Geometrie erzielende Abschnitt (76) des Dünnfilmspiegels vergrößert wird, wobei das erste Spannmittel (78, 80) in der Nähe des Rands der Saugkammer (68) unter Einhaltung eines ersten Abstands, der vom Rand der Saugkammer (68) im Wesentlichen einheitlich ist, mit der Oberfläche des Dünnfilms (72) in Kontakt ist, und
**gekennzeichnet durch**
(v) Bereitstellen eines zweiten Spannmittels (82, 84) und örtliches Einstellen des zweiten Spannmittels (82, 84), so dass der die gewünschte Geometrie erzielende Abschnitt (76) des Dünnfilmspiegels weiter vergrößert wird, wobei das zweite Spannmittel (82, 84) in der Nähe des ersten Spannmittels (78, 80) unter Einhaltung eines zweiten Abstands, der vom Rand der Saugkammer (68) im Wesentlichen einheitlich und größer als der erste Abstand vom Rand der Saugkammer (68) des ersten Spannmittels (78, 80) ist, mit der Oberfläche des Dünnfilms (72) in Kontakt ist.

2. Verfahren nach Anspruch 1, wobei der Dünnfilm (72) ein Polymerdünnfilm ist.

3. Verfahren nach Anspruch 2, wobei es sich bei dem Polymer um Polyethylenterephthalat handelt.

4. Verfahren nach einem der vorhergehenden Ansprüche, wobei der Dünnfilm (72) eine spiegelnde Fläche hat.

5. Verfahren nach Anspruch 4, wobei die spiegelnde Fläche eine aluminisierte Spiegelfläche ist.

6. Verfahren nach einem der vorhergehenden Ansprüche, wobei eine Vakuumpumpe zum Anlegen des Teilvakuums verwendet wird.

7. Verfahren nach einem der vorhergehenden Ansprüche, wobei die Saugkammer (68) ein kreisförmiges Randprofil hat.

8. Verfahren nach einem der vorhergehenden Ansprüche, wobei die Saugkammer (68) Ränder hat, die in der Geometrie des zu konstruierenden Dünnfilmspiegels liegen, wobei diese Geometrie kugelförmig ist.

9. Verfahren nach einem der Ansprüche 1 - 7, wobei die Saugkammer (68) Ränder hat, die in der Geometrie des zu konstruierenden Dünnfilmspiegels liegen, wobei diese Geometrie kreisringförmig ist.

10. Verfahren nach einem der Ansprüche 1 - 7, wobei die Saugkammer (68) Ränder hat, die in der Geometrie des zu konstruierenden Dünnfilmspiegels liegen, wobei diese Geometrie ellipsenförmig ist.

11. Verfahren nach einem der Ansprüche 1 - 7, wobei die Saugkammer (68) Ränder hat, die in der Geometrie des zu konstruierenden Dünnfilmspiegels liegen, wobei diese Geometrie paraboloid ist.

12. Verfahren nach einem der vorhergehenden Ansprüche, wobei das erste Spannmittel (78, 80) ein einzelnes kontinuierliches Spannmittel in Kontakt mit der Oberfläche des Dünnfilmspiegels ist.

13. Verfahren nach einem der Ansprüche 1 - 11, wobei das erste Spannmittel (78, 80) zwei oder mehr separate Teile umfasst.

14. Verfahren nach einem der vorhergehenden Ansprüche, wobei das erste Spannmittel (78, 80) ein flexibles Spannmittel ist.

15. Verfahren nach einem der Ansprüche 1 - 13, wobei das erste Spannmittel (78, 80) ein halbstarres Spannmittel ist.

16. Verfahren nach einem der vorhergehenden Ansprüche, wobei das erste Spannmittel (78, 80) einen kreisförmigen Querschnitt hat.

17. Verfahren nach einem der Ansprüche 1 - 15, wobei das erste Spannmittel (78, 80) einen halbkreisförmigen Querschnitt hat.

18. Verfahren nach einem der vorhergehenden Ansprüche, wobei das erste Spannmittel (78, 80) örtlich einstellbar ist.

19. Verfahren nach einem der vorhergehenden Ansprüche, wobei das zweite Spannmittel (82, 84) ein einzelnes kontinuierliches Spannmittel in Kontakt mit der Oberfläche des Dünnfilmspiegels ist.

20. Verfahren nach einem der Ansprüche 1 - 18, wobei das zweite Spannmittel (82, 84) zwei oder mehr separate Teile umfasst.

21. Verfahren nach einem der vorhergehenden Ansprüche, wobei das zweite Spannmittel (82, 84) ein flexibles Spannmittel ist.

22. Verfahren nach einem der Ansprüche 1 - 20, wobei das zweite Spannmittel (82, 84) ein halbstarres Spannmittel ist.

23. Verfahren nach einem der vorhergehenden Ansprüche, wobei das zweite Spannmittel (82, 84) einen kreisförmigen Querschnitt hat.

24. Verfahren nach einem der Ansprüche 1 - 22, wobei das zweite Spannmittel (82, 84) einen halbkreisförmigen Querschnitt hat.

25. Verfahren nach einem der vorhergehenden Ansprüche, wobei das zweite Spannmittel (82, 84) örtlich einstellbar ist.

## Revendications

1. Procédé de construction d'un miroir à film mince, lequel procédé comprend les étapes suivantes :
(i) attacher un film mince (72) à une chambre d'aspiration (68), la chambre d'aspiration (68) ayant des bords servant à attacher le film mince (72) et qui se trouvent suivant une géométrie souhaitée du miroir à film mince à construire;
(ii) appliquer un vide partiel à la chambre d'aspiration (68) de telle sorte qu'une tension soit induite dans le film mince (72) ;
(iii) ajuster le vide partiel pour former le miroir à film mince mais avec le miroir à film mince possédant la géométrie souhaitée uniquement sur une portion (76) du miroir à film mince ;
(iv) fournir des premiers moyens de tensionnement (78, 80) et ajuster localement les premiers moyens de tensionnement (78, 80) de telle sorte que la portion (76) du miroir à film mince qui possède la géométrie souhaitée soit accrue, les premiers moyens de tensionnement (78, 80) étant en contact avec la surface du film mince (72) à proximité du bord de la chambre d'aspiration (68) à une première distance qui est substantiellement uniforme depuis le bord de la chambre d'aspiration (68) ; et **caractérisé par** les étapes suivantes :
(v) fournir des deuxièmes moyens de tensionnement (82, 84) et ajuster localement les deuxièmes moyens de tensionnement (82, 84) de telle sorte que la portion (76) du miroir à film mince qui possède la géométrie souhaitée soit encore accrue, les deuxièmes moyens de tensionnement (82, 84) étant en contact avec la surface du film mince (72) adjacente aux premiers moyens de tensionnement (78, 80) à une deuxième distance qui est substantiellement uniforme depuis le bord de la chambre d'aspiration (68) et laquelle deuxième distance étant supérieure à la première distance depuis le bord de la chambre d'aspiration (68) des premiers moyens de tensionnement (78, 80).

2. Procédé selon la revendication 1, dans lequel le film mince (72) est un film mince polymère.

3. Procédé selon la revendication 2, dans lequel le polymère est du polyéthylène téréphtalate.

4. Procédé selon l'une quelconque des revendications précédentes, dans lequel le film mince (72) a une surface de miroir.

5. Procédé selon la revendication 4, dans lequel la surface de miroir est une surface de miroir aluminisée.

6. Procédé selon l'une quelconque des revendications précédentes, dans lequel une pompe à vide est utilisée pour appliquer le vide partiel.

7. Procédé selon l'une quelconque des revendications précédentes, dans lequel la chambre d'aspiration (68) a un profil de bord circulaire.

8. Procédé selon l'une quelconque des revendications précédentes, dans lequel la chambre d'aspiration (68) a des bords qui se trouvent dans la géométrie du miroir à film mince à construire, laquelle géométrie est sphérique.

9. Procédé selon l'une quelconque des revendications 1 à 7, dans lequel la chambre d'aspiration (68) a des bords qui se trouvent dans la géométrie du miroir à film mince à construire, laquelle géométrie est toroïdale.

10. Procédé selon l'une quelconque des revendications 1 à 7, dans lequel la chambre d'aspiration (68) a des bords qui se situent dans la géométrie du miroir à film mince à construire, laquelle géométrie est ellipsoïdale.

11. Procédé selon l'une quelconque des revendications 1 à 7, dans lequel la chambre d'aspiration (68) a des bords qui se situent dans la géométrie du miroir à film mince à construire, laquelle géométrie est parabolique.

12. Procédé selon l'une quelconque des revendications précédentes, dans lequel les premiers moyens de tensionnement (78, 80) sont un moyen de tensionnement continu unique en contact avec la surface du miroir à film mince.

13. Procédé selon l'une quelconque des revendications 1 à 11, dans lequel les premiers moyens de tensionnement (78, 80) comprennent deux ou plus de deux pièces séparées.

14. Procédé selon l'une quelconque des revendications précédentes, dans lequel les premiers moyens de tensionnement (78, 80) sont un moyen de tensionnement flexible.

15. Procédé selon l'une quelconque des revendications 1 à 13, dans lequel les premiers moyens de tensionnement (78, 80) sont un moyen de tensionnement semi-rigide.

16. Procédé selon l'une quelconque des revendications précédentes, dans lequel les premiers moyens de tensionnement (78, 80) ont une section transversale circulaire.

17. Procédé selon l'une quelconque des revendications 1 à 15, dans lequel les premiers moyens de tensionnement (78, 80) ont une section transversale semi-circulaire.

18. Procédé selon l'une quelconque des revendications précédentes, dans lequel les premiers moyens de tensionnement (78, 80) sont ajustables localement.

19. Procédé selon l'une quelconque des revendications précédentes, dans lequel les deuxièmes moyens de tensionnement (82, 84) sont un moyen de tensionnement continu unique en contact avec la surface du miroir à film mince.

20. Procédé selon l'une quelconque des revendications 1 à 18, dans lequel les deuxièmes moyens de tensionnement (82, 84) comprennent deux ou plus de deux pièces séparées.

21. Procédé selon l'une quelconque des revendications précédentes, dans lequel les deuxièmes moyens de tensionnement (82, 84) sont un moyen de tensionnement flexible.

22. Procédé selon l'une quelconque des revendications 1 à 20, dans lequel les deuxièmes moyens de tensionnement (82, 84) sont un moyen de tensionnement semi-rigide.

23. Procédé selon l'une quelconque des revendications précédentes, dans lequel les deuxièmes moyens de tensionnement (82, 84) ont une section transversale circulaire.

24. Procédé selon l'une quelconque des revendications 1 à 22, dans lequel les deuxièmes moyens de tensionnement (82, 84) ont une section transversale semi-circulaire.

25. Procédé selon l'une quelconque des revendications précédentes, dans lequel les deuxièmes moyens de tensionnement (82, 84) sont ajustables localement.
